# EUROPEAN PATENT APPLICATION

(11) **EP 4 455 070 A1**
(43) Date of publication of application: **30.10.2024**
(21) Application number: 24170094.7
(22) Date of filing: 12.04.2024
(51) Int. Cl.: B66B 1/34, B23Q 7/14

(54) **TRANSPORT MANAGEMENT SYSTEM, TRANSPORT MANAGEMENT METHOD, AND PROGRAM**

(30) Priority: 19.04.2023 JP 2023068664
(71) Applicant: Horizon Inc., Takashima-shi, Shiga 520-1501 (JP)
(72) Inventor: NISHIMURA, Kohei, Takashima-shi, Shiga, 520-1501 (JP)
(74) Representative: Lippert Stachow Patentanwälte Rechtsanwälte

(57) **Abstract**

To achieve smooth automatic transportation of transport objects with use of an elevator, provided is a transport management system (1), which is a system configured to control transportation of carriages in cooperation with an elevator control device 4 configured to control the elevator. The transport management system (1) includes a carriage identifying unit (23) configured to identify one or a plurality of carriages to be moved to a car (7) of the elevator, an AGV management unit (25) configured to transmit, to one or a plurality of AGVs (6), a transport instruction for moving all the identified carriages to the car 7, and an elevator cooperation unit (24) configured to transmit an entry-to-car completion signal to an elevator control device (4) in response to completion of motion of all the identified carriages to the car (7).

## Description

### BACKGROUND

### 1. TECHNICAL FIELD

The present disclosure relates to a transport management system, a transport management method, and a program.

### 2. DESCRIPTION OF RELATED ART

For production lines of factories or the like, technologies to manage components needed for respective processes by means of a production management system and automatically transport necessary components in accordance with the progress status of respective processes by means of automatic guided vehicles have been conventionally proposed (for example, Japanese Patent Application Laid-Open No. 2002-229619).

Japanese Patent Application Laid-Open No. 2002-229619 is an example of the related art.

### BRIEF SUMMARY

When a component storage location is on a different floor from work locations of respective processes, it is necessary to use an elevator for automatic transportation of components. In such a case, it is required to cause automatic transportation of components performed by automatic guided vehicles and lift control of the elevator to be cooperated with each other. Further, it is expected that automatic transportation of transport objects that relies on automatic guided machines with use of an elevator is needed in various fields in the future without being limited to the automatic transportation of components as described above.

The present disclosure has been made in view of such circumstances and intends to provide a transport management system, a transport management method, and a program that can smoothly perform automatic transportation of transport objects with use of an elevator.

One aspect of the present disclosure is a transport management system configured to control transportation of transport objects in cooperation with an elevator control device configured to control an elevator in a building having a plurality of floors, stations being arranged on the floors, respectively, a plurality of points being provided in the stations, and the transport objects being placed on each of the points. The transport management system includes: a transport object identifying unit configured to extract transport objects associated with the same dispatch floor and the same destination floor by using transport management information and a further information and identify the extracted transport objects as transport targets to be moved to a car of the elevator, the transport management information including dispatch points and destination points in association with each other for transport objects ready to be dispatched, and the further information including, in association with each other, each of the dispatch points and the destination points, identification information on transport objects arranged at the dispatch points and the destination points, the stations where the dispatch points and the destination points are arranged, and installation floors of the corresponding stations; an automatic guided vehicle management unit configured to transmit, to one or a plurality of automatic guided vehicles, a transport instruction for moving all the identified transport targets to the car; and an elevator cooperation unit configured to transmit an entry-to-car completion signal to an elevator control device in response to completion of motion of all the identified transported targets to the car.

One aspect as a reference example of the present disclosure is a transport management system configured to control transportation of transport objects in cooperation with an elevator control device configured to control an elevator, and the transport management system includes a transport object identifying unit configured to identify one or a plurality of transport objects to be moved to a car of the elevator; an automatic guided vehicle management unit configured to transmit, to one or a plurality of automatic guided vehicles, a transport instruction for moving all the identified transport objects to the car; and an elevator cooperation unit configured to transmit an entry-to-car completion signal to an elevator control device in response to completion of motion of all the identified transported objects to the car.

One aspect of the present disclosure is a transport management method for controlling transportation of transport objects in cooperation with an elevator control device configured to control an elevator in a building having a plurality of floors, stations being arranged on the floors, respectively, a plurality of points being provided in the stations, and the transport objects being placed on each of the points. The transport management method causes a computer to perform processes of: extracting transport objects associated with the same dispatch floor and the same destination floor by using transport management information and a further information and identifying the extracted transport objects as transport targets to be moved to a car of the elevator, the transport management information including dispatch points and destination points in association with each other for transport objects ready to be dispatched, and the further information including, in association with each other, each of the dispatch points and the destination points, identification information on transport objects arranged at the dispatch points and the destination points, the stations where the dispatch points and the destination points are arranged, and installation floors of the corresponding stations; transmitting, to one or a plurality of automatic guided vehicles, a transport instruction for moving all the identified transport targets to the car; and transmitting an entry-to-car completion signal to an elevator control device in response to completion of motion of all the identified transported targets to the car.

One aspect of the present disclosure is a transport management method according to the present invention applying a transport management system according to the present invention.

One aspect as a reference example of the present disclosure is a transport management method for controlling transportation of transport objects in cooperation with an elevator control device configured to control an elevator, and the transport management method causes a computer to perform processes of: identifying one or a plurality of transport objects to be moved to a car of the elevator; transmitting, to one or a plurality of automatic guided vehicles, a transport instruction for moving all the identified transport objects to the car; and transmitting an entry-to-car completion signal to an elevator control device in response to completion of motion of all the identified transported objects to the car.

One aspect as a reference example of the present disclosure is a program for causing a computer to function as the transport management system described above.

One aspect of the present disclosure is a program comprising instructions to cause the transport management system according to the present invention to execute the steps of the transport management method according to the present invention.

One aspect as a reference example of the present disclosure is an elevator control device configured to perform lift control of a car based on a signal from a transport management system configured to manage transportation of transport objects, and the elevator control device includes a mode setting unit configured to apply a call disable mode in response to accepting a call request signal for calling the car from the transport management system and apply a call enable mode in response to accepting a cooperation release signal for releasing cooperation, the call disable mode being to reject any new call request, and the call enable mode being to enable accepting of a new call request.

One aspect as a reference example of the present disclosure is an elevator control method for performing lift control of a car based on a signal from a transport management system configured to manage transportation of transport objects, and the elevator control method causes a computer to perform a process of: applying a call disable mode in response to accepting a call request signal for calling the car from the transport management system and applying a call enable mode in response to accepting a cooperation release signal for releasing cooperation, the call disable mode being to reject any new call request, and the call enable mode being to enable accepting of a new call request..

The present disclosure achieves an advantageous effect of enabling automatic transportation of transport objects with use of an elevator to be smoothly performed.

### BRIEF DESCRIPTION OF THE SEVERAL VIEWS OF THE DRAWINGS

Fig. 1 is a system configuration diagram schematically illustrating an overall configuration of a component supply system according to one embodiment of the present disclosure.
Fig. 2 is a diagram illustrating an example of stations according to one embodiment of the present disclosure.
Fig. 3 is a schematic configuration diagram illustrating an example of a hardware configuration of a transport management device according to one embodiment of the present disclosure.
Fig. 4 is a function configuration diagram illustrating an example of functions of a transport management system and an elevator control device according to one embodiment of the present disclosure.
Fig. 5 is a diagram illustrating an example of transport management information according to one embodiment of the present disclosure.
Fig. 6 is a diagram illustrating an example of station information according to one embodiment of the present disclosure.
Fig. 7 is a diagram illustrating an example of carriage information according to one embodiment of the present disclosure.
Fig. 8 is a flowchart illustrating an example of a procedure of processes performed by the transport management system and the elevator control device according to one embodiment of the present disclosure.
Fig. 9 is a flowchart illustrating an example of the procedure of processes performed by the transport management system and the elevator control device according to one embodiment of the present disclosure.

### DETAILED DESCRIPTION

One embodiment of a transport management system, a transport management method, and a program according to the present disclosure will be described below with reference to the drawings. Although a case where the transport management system is applied to a component supply system that transports components in a production line will be described as an example in the embodiment illustrated below, the scope of the present disclosure is not limited thereto. That is, the transport management system of the present disclosure can be widely applied to automatic transportation of transport objects relying on automatic guided vehicles (AGVs) with use of an elevator (a lift apparatus). Herein, the transport object is not particularly limited as long as it is transportable. An example thereof may be a carriage loaded with a component, an empty carriage, luggage, equipment, or the like.

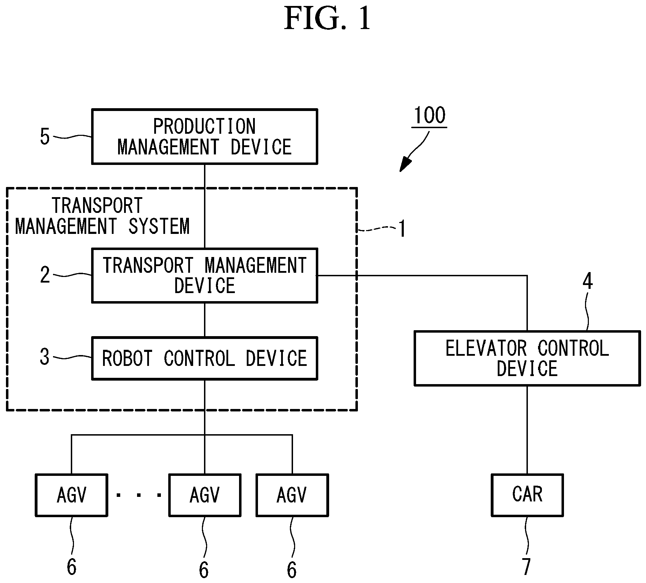

Fig. 1 is a system configuration diagram schematically illustrating an overall configuration of a component supply system 100 according to one embodiment of the present disclosure.

For example, the component supply system 100 is a system for automatically supplying components needed in respective assembly work locations in a production line. As illustrated in Fig. 1, the component supply system 100 according to the present embodiment includes a transport management system 1. For example, the transport management system 1 includes a transport management device 2 and a robot control device 3. Further, the transport management system 1 is configured to be able to communicate with a production management device 5 and an elevator control device 4.

For example, the production management device 5 is a device that performs process management in a production line. For example, the production management device 5 has progress management information that is information about the progress of work at each assembly work location. This progress management information is used for generating transport management information on carriages described later.

For example, information on components requested to be supplied or the like is registered in the progress management information in association with respective assembly work locations.

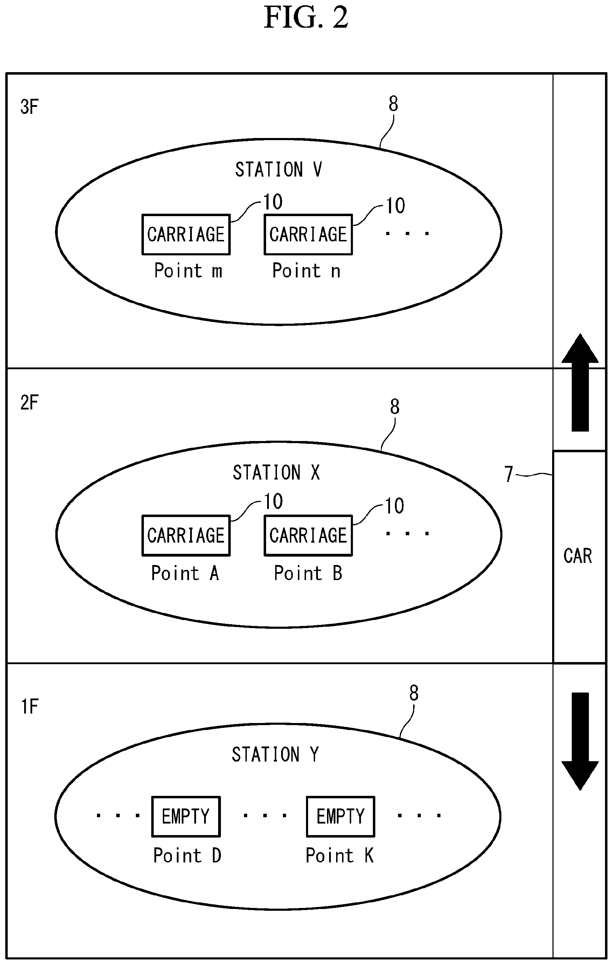

Components needed for respective assembly work locations have been set on carriages 10 (see Fig. 2) and, in this state, are arranged in stations (areas), respectively. Fig. 2 is a diagram illustrating an example of stations 8 according to the present embodiment. As illustrated in Fig. 2, in the present embodiment, the stations 8 are provided on a plurality of floors in a building. Note that, although the case where a single station 8 is provided on each floor is illustrated in Fig. 2 as an example, a plurality of stations 8 may be provided on a single floor without being limited to the above. Respective stations 8 are labeled with respective unique identification numbers Y, X, V, and the like and thus managed in an identifiable manner.

Each station 8 is provided with a plurality of points A, B, .... These points correspond to positions at which the carriages 10 are placed, and one carriage 10 is arranged at each one point. In such a way, one or a plurality of carriages 10 that are ready to be dispatched are arranged at corresponding points in the stations 8 on respective floors.

The transport management system 1 is a system for automatically delivering the carriages 10 arranged in the stations 8 to assembly work locations that are destinations. In the present embodiment, the carriages 10 are transported by AGVs 6. The transport management system 1 controls transportation of the carriages 10, which are the transport objects, in cooperation with the elevator control device 4 that controls a car 7, which is the lift apparatus.

Herein, the carriage 10 may be transported to the final destination via a plurality of stations 8 or may be transported to the final destination directly from one station. While the final destination is mostly an assembly work location, the nearest station to an assembly work location may be set as the final destination.

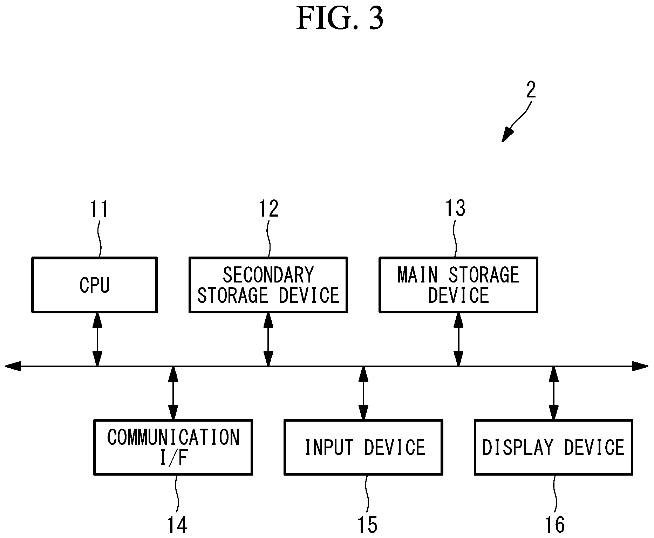

The transport management system 1 includes, for example, the transport management device 2 and the robot control device 3. Fig. 3 is a schematic configuration diagram illustrating an example of the hardware configuration of the transport management device 2. As illustrated in Fig. 3, the transport management device 2 has a computer and includes, for example, a CPU 11, a secondary storage device 12 for storing a program executed by the CPU 11 and data or the like referenced by this program, and a main storage device (main memory) 13 that functions as a work region during execution of each program. Further, the transport management device 2 may include a communication interface 14 for connecting to a network, an input device 15 that functions as a user interface, a display device 16 that displays data, and the like. These devices are connected to each other via a bus, for example. The secondary storage device 12 may be, for example, a magnetic disk, a magnetic optical disk, a semiconductor memory, or the like as an example.

A series of processes for implementing various functions described later are stored in the secondary storage device 12 in a form of a program as an example, and various functions are implemented when the CPU 11 loads the program into the main storage device 13 and performs modification and calculation processing on information. Note that, for the program, a form of being installed in advance in the secondary storage device 12, a form of being provided in a state of being stored in another computer readable storage medium, a form of being delivered via a wired or wireless communication connection, or the like may be applied. The computer readable storage medium may be a magnetic disk, a magnetic optical disk, a CD-ROM, a DVD-ROM, a semiconductor memory, or the like.

Further, the robot control device 3, the elevator control device 4, and the production management device 5 also include a computer in the same manner. Functions implemented by respective devices are stored in respective secondary storage device in a form of a program, and various functions are implemented when the CPU loads the program into the main storage device and performs modification and calculation processing on information.

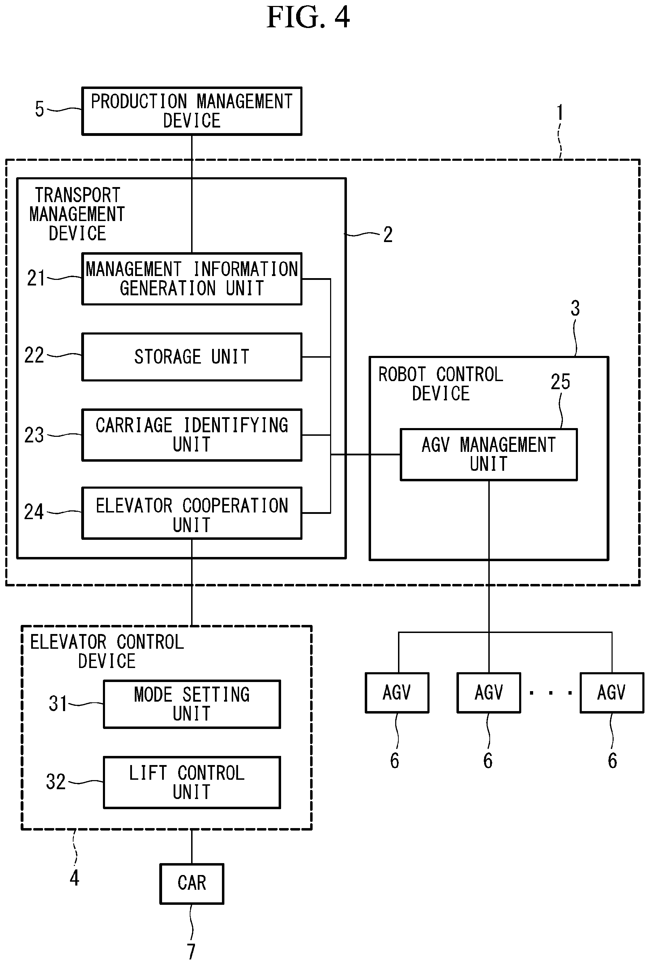

Fig. 4 is a function configuration diagram illustrating an example of functions of the transport management system 1 and the elevator control device 4 according to the present embodiment. As illustrated in Fig. 4, the transport management system 1 includes a management information generation unit 21, a storage unit 22, a carriage identifying unit (transport object identifying unit) 23, an elevator cooperation unit 24, an automatic guided vehicle management unit (hereafter, referred to as "AGV management unit") 25, and the like. In the present embodiment, a case where the function of the AGV management unit 25 is implemented by the robot control device 3 and the remaining functions are implemented by the transport management device 2 will be described as an example.

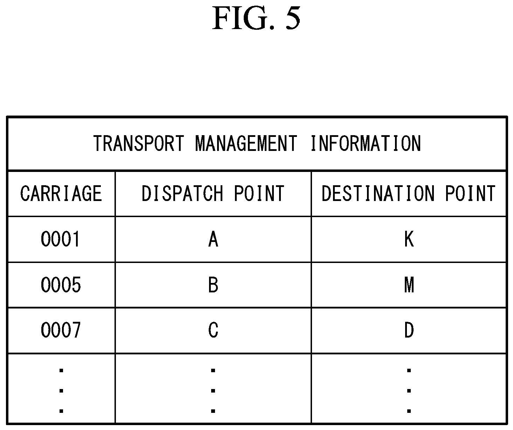

For example, based on progress management information managed by the production management device 5, the management information generation unit 21 generates transport management information in which dispatch points and destination points of the carriages 10 are associated with each other. Fig. 5 illustrates an example of the transport management information. As illustrated, dispatch points and destination points for the carriages 10 that are ready to be dispatched are registered in the transport management information. This transport management information is updated at any time in accordance with the progress management information in the production management device 5, completion of transportation of the carriage 10, and the like. For example, the transport management information is sorted in descending order from the oldest information and may be subjected to a transport process from older information. Further, priority may be given to the transport management information, and transportation may be performed based on the priority.

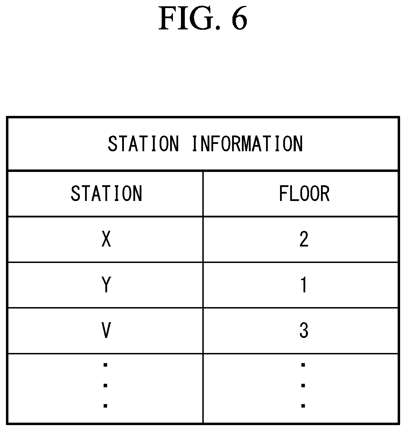

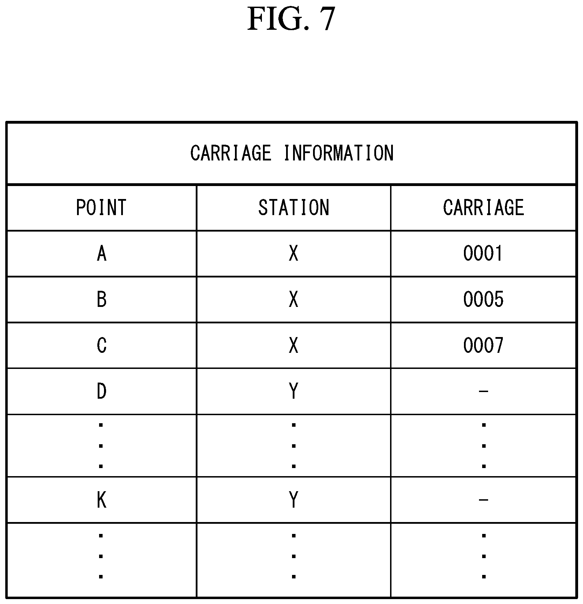

The storage unit 22 stores various information required in automatic transportation of the carriages 10. For example, in addition to the transport management information described above, the storage unit 22 stores station information in which respective stations and installation floors thereof are associated with each other as illustrated in Fig. 6 and carriage information in which points, stations where the points are arranged, and identification information on carriages arranged at the points are associated with each other as illustrated in Fig. 7. The identification information on carriages in the carriage information is updated at any time in linkage with the transport management information described above.

Note that, although the transport management information, the station information, and the carriage information are managed separately in the present embodiment, the management is not limited to such an information management method. For example, these three pieces of information may be integrated and managed as a single piece of information. Further, two out of these three pieces of information may be integrated.

The carriage identifying unit 23 identifies one or a plurality of carriages 10 to be moved to the car 7 by using the transport management information (see Fig. 4) in which dispatch points and destination points are registered for respective carriages 10 that are ready to be dispatched. For example, the carriage identifying unit 23 identifies, as one transport target, any one of the carriages in the transport management information and further identifies, as another transport target, another carriage 10 associated with the same dispatch floor and the same destination floor as the one carriage 10 identified as the one transport target.

For example, when description is provided with an example of the transport management information illustrated in Fig. 4, the carriage identifying unit 23 uses the carriage information (see Fig. 7) to determine whether or not a carriage 10 is arranged at a point K that is the destination point for a carriage with the identification information "0001" listed at the top in the transport management information. Since the point K is an empty point according to the carriage information illustrated as an example in Fig. 7, it is determined that motion to the point K is possible, and the carriage 10 with the identification information "0001" is identified as a transport target to be moved to the car 7. Note that, when a carriage is already arranged at the destination point for the carriage of interest, the carriage of interest is not identified as a transport target, the same determination is performed on a next carriage, that is, the carriage with the identification information "0005", and a carriage associated with the destination point of an empty point is identified as a transport target.

Subsequently, the carriage identifying unit 23 further references the carriage information and the station information and identifies the second floor, which is the floor of the station X where the dispatch point A for the carriage with the identification information "0001" identified as the transport target is arranged, and the first floor, which is the floor of the station Y where the destination point K is arranged. Then, the carriage 10 associated with the same dispatch floor, "second floor", and the same destination floor, "first floor", and associated with the destination point of an empty point is further identified as a transport target. As a result, the carriage with the identification information "0007" for which the dispatch point C and the destination point D are registered is identified as a transport target. Note that the number of loadable carriages has been determined for the car 7. Therefore, when the number of carriages identified as the transport targets exceeds the maximum number of loadable carriages of the car 7, the carriage identifying unit 23 adjusts the number of carriages 10 of the transport targets so that the number of carriages is less than or equal to the maximum number of loadable carriages. For example, a carriage with lower priority, for example, a carriage associated with newly generated transport management information is excluded from the transport targets.

When the carriage identifying unit 23 has identified one or more carriages 10 of the transport targets in such a way, the carriage identifying unit 23 generates transport instruction information on the one or more carriages identified as the transport targets and outputs the transport instruction information to the AGV management unit 25. In this transport instruction information, for example, the identification information, the dispatch point, the floor number of the dispatch point, the destination point, and the floor number of the destination point are registered in association with each other for each identified carriage 10.

The AGV management unit 25 transmits, to one or a plurality of AGVs 6, a transport instruction used for moving all the identified carriages 10 to the car 7 based on the transport instruction information on carriages. For example, when the carriages 10 with the identification information 0001, 0007 are registered in the transport instruction information on carriages, AGVs 6 are allocated to these carriages 10, respectively. The AGV management unit 25 then periodically communicates with respective allocated AGVs 6 and thereby causes the AGVs 6 to transport the carriages 10 from the dispatch points to the destination points.

The elevator cooperation unit 24 cooperates with the elevator control device 4 to smoothly perform motion of the carriages 10 when the AGV 6 moves to a different floor in transportation of the carriage 10.

For example, when at least one AGV 6 reaches the elevator hall, the elevator cooperation unit 24 transmits, to the elevator control device 4, a call request signal used for calling the car 7 to come to the floor (calling floor) where the AGV 6 stands by. Further, in response to completion of loading on the car 7 of all the carriages 10 registered in the transport instruction information, the elevator cooperation unit 24 transmits a lift request signal to the elevator control device 4. Further, in response to completion of unloading from the car 7 of all the carriages 10 registered in the transport instruction information, the elevator cooperation unit 24 transmits, to the elevator control device 4, a cooperation release signal for releasing the cooperation with the elevator control device 4.

The elevator control device 4 performs lift control of the car 7 based on a signal from the transport management system 1. The elevator control device 4 includes, for example, a mode setting unit 31 and a lift control unit 32.

The mode setting unit 31 switches the mode based on a signal from the transport management system 1, for example. For example, when the mode setting unit 31 has received a call request signal, the mode setting unit 31 applies a call disable mode to reject any new call request. Further, when the mode setting unit 31 has received a cooperation release signal from the transport management system 1, the mode setting unit 31 applies a call enable mode to enable accepting of a new call request. Accordingly, when the call disable mode is applied, for example, even when a person intending to use the elevator makes a call or the like, the call is not accepted resulting in a cancel or standby state. In such a way, a further call is not accepted when the carriage 10 is transported, and thereby transportation of the carriage 10 can be smoothly and effectively performed.

When the lift control unit 32 has accepted a call request signal from the transport management system 1, the lift control unit 32 moves the car 7 to the calling floor, and when the lift control unit 32 has accepted a lift request signal from the transport management system 1, the lift control unit 32 moves the car 7 to the destination floor. Further, the lift control unit 32 controls opening and closing of the door when the car 7 reaches the calling floor or the destination floor.

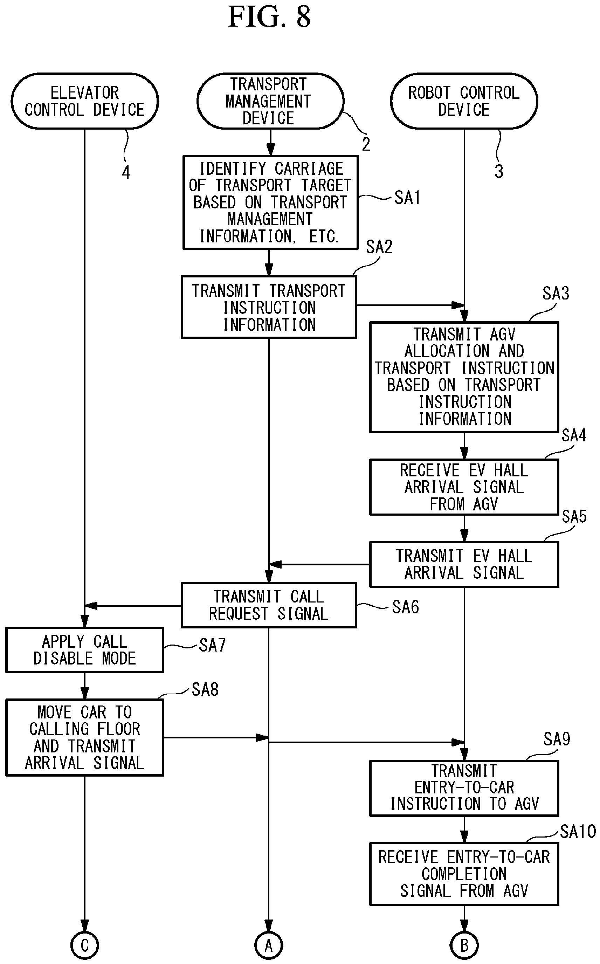

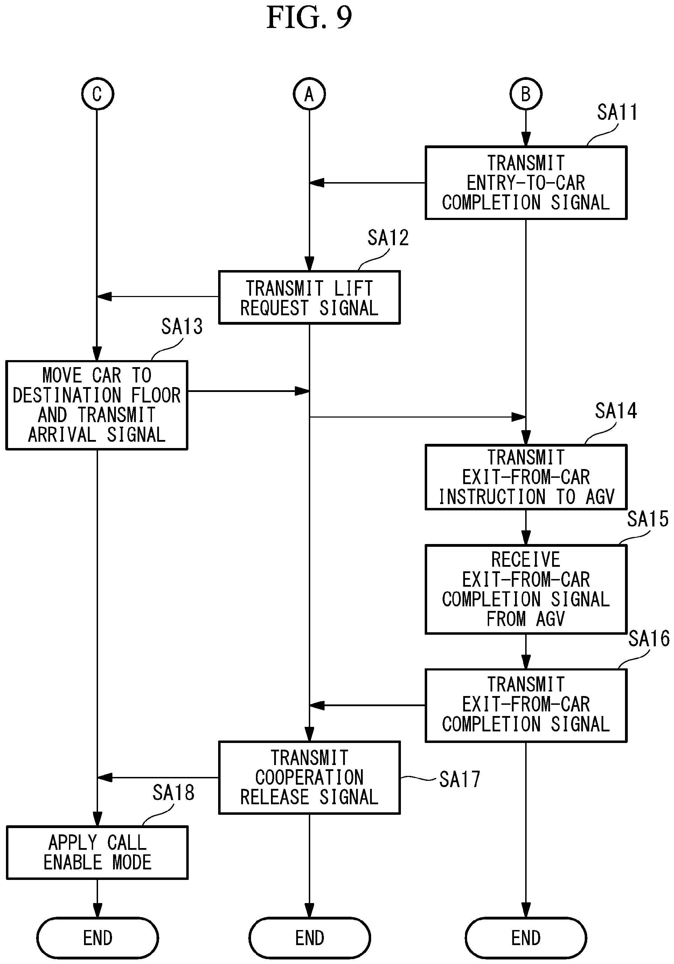

Next, the operation of the transport management system 1 and the elevator control device 4 according to the present embodiment will be described with reference to the drawings. Fig. 8 and Fig. 9 are flowcharts illustrating an example of a procedure of processes performed by the transport management system 1 and the elevator control device 4 according to the present embodiment. The transport management system 1 repeatedly performs this process at predetermined timings and thereby realizes automatic transport of the carriages 10.

First, the transport management device 2 identifies the carriage 10 to be moved to the car 7 as a transport target based on transport management information or the like (SA1). The transport management device 2 then generates transport instruction information in which the identification information, the dispatch point, the destination point, and the like are associated with each other for each carriage 10 identified as the transport target and transmits the transport instruction information to the robot control device 3 (SA2). The robot control device 3 allocates the AGV 6 to each carriage 10 of the transport target based on the transport instruction information and transmits a transport instruction to the allocated carriage 10 (SA3). Accordingly, the allocated AGV 6 is moved to the corresponding dispatch point to transport the carriage 10 arranged at the dispatch point to the elevator hall.

For example, in response to reaching the elevator hall, each AGV 6 transmits an EV hall arrival signal indicating arrival at the elevator hall to the robot control device 3. In response to receiving the EV hall arrival signal from any AGV 6 (SA4), the robot control device 3 transmits the EV hall arrival signal to the transport management device 2 (SA5).

In response to receiving the EV hall arrival signal, the transport management device 2 transmits a call request signal to the elevator control device 4 (SA6). In response to receiving the call request signal, the elevator control device 4 applies the call disable mode to reject another call request (SA7). The elevator control device 4 then moves the car 7 to the calling floor, and upon arrival at the calling floor, opens the door and transmits an arrival signal to the transport management device 2 (SA8). In response to receiving the arrival signal, the transport management device 2 transmits the arrival signal to the robot control device 3.

In response to receiving the arrival signal, the robot control device 3 transmits an entry-to-car instruction for causing the AGV 6 to enter the car 7 (SA9). Accordingly, the AGV 6 loaded with the carriage 10 of the transport target moves into the car 7. In response to completion of the entry to the car in such a way, the AGV 6 transmits an entry-to-car completion signal to the robot control device 3. In response to receiving the entry-to-car completion signal from all the AGVs 6 corresponding to the carriages of the transport targets registered in the transport instruction information (SA10), the robot control device 3 transmits the entry-to-car completion signal to the transport management device 2 (SA11 in Fig. 9). In response to receiving the entry-to-car completion signal, the transport management device 2 transmits a lift request signal to the elevator control device 4 (SA12).

In response to receiving the lift request signal, the elevator control device 4 moves the car 7 to the destination floor, and upon arrival at the destination floor, opens the door and transmits the arrival signal to the transport management device 2 (SA13). In response to receiving the arrival signal, the transport management device 2 transmits the arrival signal to the robot control device 3.

In response to receiving the arrival signal, the robot control device 3 transmits an exit-from-car instruction for causing the AGV 6 to exit the car 7 (SA14). Accordingly, the AGV 6 loaded with the carriage 10 of the transport target exits the car 7. Then, in response to completion of the exit from the car, the AGV 6 transmits an exit-from-car completion signal to the robot control device 3. In response to receiving the exit-from-car completion signal from all the AGVs 6 corresponding to the carriages of the transport targets registered in the transport instruction information (SA15), the robot control device 3 transmits the exit-from-car completion signal to the transport management device 2 (SA16). In response to receiving the exit-from-car completion signal, the transport management device 2 transmits a cooperation release signal to the elevator control device 4 (SA17).

In response to receiving the cooperation release signal, the elevator control device 4 applies the call enable mode to accept another call request (SA18).

As described above, according to the present embodiment, the transport management system 1 includes the carriage identifying unit 23 configured to identify one or a plurality of carriages 10 to be moved to the car 7 of the elevator as a transport target, the AGV management unit 25 configured to transmit, to one or a plurality of AGVs 6, a transport instruction for moving all the carriages 10 identified as the transport targets to the car 7, and the elevator cooperation unit configured to transmit an entry-to-car completion signal to the elevator control device 4 in response to completion of motion of all the carriages 10 identified as the transport targets to the car 7.

Accordingly, automatic transportation of a plurality of carriages 10 with the use of an elevator can be smoothly performed.

Further, in the transport management system 1, when at least one AGV 6 reaches the elevator hall, the elevator cooperation unit 24 transmits, to the elevator control device 4, a call request signal for calling the car to the floor where the AGV stands by. Accordingly, it is possible to efficiently call the car 7 to the calling floor, this can reduce the waiting time for car motion, and the carriage 10 of the transport targets can be efficiently transported.

Further, in the transport management system 1, the carriage identifying unit 23 extracts a transport object associated with the same dispatch floor and the same destination floor by using the transport management information and identifies the extracted carriage 10 as a transport target. This enables a plurality of carriages 10 to be loaded on the car 7. Thus, the transport efficiency of the carriages 10 can be improved.

Further, the transport management system 1 includes the management information generation unit 21 configured to generate transport management information in which the carriages, the dispatch points, and the destination points are associated with each other based on the progress management information managed by the production management device 5 configured to perform process management in the production line.

Accordingly, the transport management information is generated in cooperation with the production management device 5 in such a way, and thereby components can be automatically supplied at a suitable timing in accordance with the progress in the process in the production line.

Further, the elevator control device 4 includes the mode setting unit 31 configured to apply the call disable mode, which is to reject any new call request, in response to accepting a call request signal for calling the car 7 from the transport management system 1 and apply a call enable mode, which is to enable accepting of a new call request, in response to accepting a cooperation release signal for releasing cooperation from the transport management system 1.

A further call request is rejected in a period during which the carriages 10 are being transported by using the elevator in such a way, and thereby the transport efficiency of the carriages 10 can be improved.

As described above, although the present disclosure has been described with reference to the embodiments, the technical scope of the present disclosure is not limited to the scope described in the above embodiments. Various modification or improvement can be added to the above embodiments within the scope not departing from the spirit of the disclosure, forms to which such modification or improvement is added also fall in the technical scope of the present disclosure. Further, the above embodiments may be combined as appropriate.

Further, the flow of the processes described in the above embodiments is also an example, and an unnecessary step may be deleted, a new step may be added, or processing order may be exchanged within the scope not departing from the spirit of the present disclosure.

For example, although the transport management system 1 includes the robot control device 3 and controls the AGVs 6 by using the robot control device 3 in the embodiment described above, the invention is not limited thereto. For example, the robot control device 3 may be omitted, and the transport management device 2 may have the function of the robot control device 3. In such a case, the transport management device 2 controls each AGV 6.

Further, although the case where a single AGV 6 is allocated to each carriage 10, the AGV 6 enters the car 7 while carrying a carriage, is moved up or down, then exits the car 7, and moves to the destination point has been illustrated as an example in the embodiment described above, the invention is not limited thereto. For example, AGVs 6 are prepared on the dispatch floor and the destination floor, respectively, and the AGV 6 that moves the carriage 10 to the car 7 on the dispatch floor and the AGV 6 that moves the carriage 10 from the car 7 on the destination floor may be different from each other. Further, in such a case, a plurality of carriages 10 may be allocated to a single AGV 6, the single AGV 6 may be reciprocated multiple times, and thereby the plurality of carriages 10 may be moved.

### [List of Reference Numerals]

- 1:: transport management system
- 2:: transport management device
- 3:: robot control device
- 4:: elevator control device
- 5:: production management device
- 6:: automatic guided vehicle (AGV)
- 7:: car
- 8:: station
- 10:: carriage
- 11:: CPU
- 12:: secondary storage device
- 13:: main storage device
- 14:: communication interface
- 15:: input device
- 16:: display device
- 21:: management information generation unit
- 22:: storage unit
- 23:: carriage identifying unit (transport object identifying unit)
- 24:: elevator cooperation unit
- 25:: AGV management unit (automatic guided vehicle management unit)
- 31:: mode setting unit
- 32:: lift control unit
- 100:: component supply system

## Claims

1. A transport management system configured to control transportation of transport objects in cooperation with an elevator control device configured to control an elevator in a building having a plurality of floors, stations being arranged on the floors, respectively, a plurality of points being provided in the stations, and the transport objects being placed on each of the points, the transport management system comprising:
a transport object identifying unit configured to extract transport objects associated with the same dispatch floor and the same destination floor by using transport management information and a further information and identify the extracted transport objects as transport targets to be moved to a car of the elevator, the transport management information including dispatch points and destination points in association with each other for transport objects that are ready to be dispatched, and the further information including, in association with each other, each of the dispatch points and the destination points, identification information on transport objects arranged at the dispatch points and the destination points, the stations where the dispatch points and the destination points are arranged, and installation floors of the corresponding stations;
an automatic guided vehicle management unit configured to transmit, to one or a plurality of automatic guided vehicles, a transport instruction for moving all the identified transport targets to the car; and
an elevator cooperation unit configured to transmit an entry-to-car completion signal to an elevator control device in response to completion of motion of all the identified transported targets to the car.

2. The transport management system according to claim 1, wherein the transport object identifying unit identifies, as one transport target, one transport object out of the transport objects that are ready to be dispatched, wherein the same transport object as the one transport object is not arranged at the destination point, and the transport object identifying unit further identifies, as another transport target, another transport object associated with the same dispatch floor and the same destination floor as the one transport target.

3. The transport management system according to claim 1 or 2, wherein when at least one of the automatic guided vehicles reached an elevator hall, the elevator cooperation unit transmits, to the elevator control device, a call request signal for calling the car to a floor where the one of the automatic guided vehicles stands by.

4. The transport management system according to any of claims 1 to 3, further comprising a management information generation unit configured to generate the transport management information based on progress management information managed by a production management device configured to perform process management in a production line.

5. The transport management system according to any of claims 1 to 4, wherein when the elevator cooperation unit received an exit-from-car completion signal indicating that all the transport objects exited the car that reached a destination floor, the elevator cooperation unit transmits a cooperation release signal for releasing cooperation with the elevator control device.

6. A transport management method for controlling transportation of transport objects in cooperation with an elevator control device configured to control an elevator in a building having a plurality of floors, stations being arranged on the floors, respectively, a plurality of points being provided in the stations, and the transport objects being placed on each of the points, the transport management method causing a computer to perform processes of:
extracting transport objects associated with the same dispatch floor and the same destination floor by using transport management information and a further information and identifying the extracted transport objects as transport targets to be moved to a car of the elevator, the transport management information including dispatch points and destination points in association with each other for transport objects that are ready to be dispatched, and the further information including, in association with each other, each of the dispatch points and the destination points, identification information on transport objects arranged at the dispatch points and the destination points, the stations where the dispatch points and the destination points are arranged, and installation floors of the corresponding stations;
transmitting, to one or a plurality of automatic guided vehicles, a transport instruction for moving all the identified transport targets to the car; and
transmitting an entry-to-car completion signal to an elevator control device in response to completion of motion of all the identified transported targets to the car.

7. A transport management method according to claim 6 applying a transport management system of any of claims 1 to 5.

8. A program for causing a computer to function as the transport management system according to any one of claims 1 to 5.

9. A program comprising instructions to cause the transport management system of any of claims 1 to 5 to execute the steps of the method claim 6 or 7.

10. A computer readable storage medium comprising a program according to claim 8 or 9.
